# EUROPÄISCHE PATENTANMELDUNG

(11) **EP 1 737 279 A2**
(43) Veröffentlichungstag der Anmeldung: **27.12.2006**
(21) Anmeldenummer: 06012555.6
(22) Anmeldetag: 19.06.2006
(51) Int. Cl.: H05B 41/288

(54) **Vorrichtung zum Bereitstellen einer sinusförmig amplitudenmodulierten Betriebsspannung Beleuchtungssystem und Verfahren zum Erzeugen einer amplitudenmodulierten Spannung**

(30) Priorität: 20.06.2005 DE 102005028417
(71) Anmelder: Patent-Treuhand-Gesellschaft für elektrische Glühlampen mbH, 81543 München (DE)
(72) Erfinder: Kästle, Herbert, 83278 Traunstein (DE)
(74) Vertreter: Raiser, Franz

(57) **Zusammenfassung**

Bei einer Vorrichtung zum Bereitstellen einer sinusförmig amplitudenmodulierten Betriebsspannung sind zwei Schalter als Halbbrücke angeordnet, und der Halbbrücke ist ein LC-Glied nachgeordnet. Der erste Schalter wird in einer Taktung mit der Amplitudenmodulationsfrequenz pro Takt mit einem ersten Rechtecksignal angesteuert, und der zweite Schalter (QLOW) wird zeitversetzt zu dem ersten Signal in jedem Takt mit einem zweiten Rechtecksignal angesteuert, das kürzer als das erste Signal ist. Das LC-Glied (LMOD, CMOD) wirkt als Filter für das sich aus der Ansteuerung der Schalter an einem Verbindungspunkt (K) zwischen den Schaltern ergebende Signal und lässt eine Gleichspannungskomponente sowie eine sinusförmige Komponente des Signals mit der Grundfrequenz der Taktung durch, filtert aber Harmonische im Wesentlichen aus.

## Beschreibung

### Technisches Gebiet

Die Erfindung betrifft eine Vorrichtung zum Bereitstellen einer sinusförmig amplitudenmodulierten Betriebsspannung. Sie betrifft auch ein Beleuchtungssystem mit einer solchen Vorrichtung sowie allgemein ein Verfahren zum Erzeugen einer amplitudenmodulierten Spannung.

### Stand der Technik

Zum Betrieb einer Hochdruck-Entladungslampe wird eine sinusförmige Betriebswechselspannung benötigt, deren Betriebsfrequenz je nach Geometrie des Lampenbrenners typischerweise (bei 70 W-Lampen) im Bereich von zwischen 45 kHz bis 55 kHz und meist im 100 Hz-Takt sägezahnförmig gesweept wird. Der Sweepbetrieb verhindert im Allgemeinen die Anregung akustischer Resonanzen und trägt damit zur Stabilisierung des Plasmabogens bei. Des Weiteren bewirkt die Wahl eines geeigneten Sweepfensters durch gezielte Anregung geeigneter transversaler Resonanzen eine Begradigung des Entladungsbogens insbesondere im horizontalen Betrieb.

Gleichzeitig mit der Frequenzmodulation sollte die Betriebswechselspannung amplitudenmoduliert werden. Die Modulation sollte entsprechend der Geometrie des Lampenbrenners sowohl in der Frequenz zwischen 20 kHz und 50 kHz (typischerweise bei einer 70 W-Lampe von 23 kHz bis 30 kHz, bei einer 150 W-Lampe von 20 kHz bis 25 kHz, bei einer 35 W-Lampe von 34 kHz bis 40 kHz) als auch in der Modulationstiefe (typischerweise von 10 % bis 40 %) einstellbar sein. Die Amplitudenmodulation dient zur gezielten Anregung einer speziellen longitudinalen akustischen Resonanz im Plasmabogen in der Lampe. Diese Longitudinalmode lässt das Brennverhalten des Bogens (Bogenstabilität) unbeeinträchtigt, bewirkt aber stattdessen eine verstärkte Durclunischung der Gaskomponenten im Brennraum (sogenanntes Colormixing). Die Verhinderung der so genannten Segregation durch die Amplitudenmodulation führt somit zu einer homogeneren Leuchtdichte entlang des Plasmabogens und auch zu einer beträchtlichen Effizienzsteigerung bei der Lichtausbeute.

Im Stand der Technik werden häufig bei den vorliegenden Betriebsfrequenzen Halbbrücken-Inverter zur Ankoppelung der Lampe an ein elektronisches Vorschaltgerät verwendet. Um die Amplitudenmodulation der Lampenversorgungsspannung bzw. des Versorgungsstroms zu realisieren, wird die Modulation im Stand der Technik über eine separate Vorstufe auf die Versorgungsspannung der Halbbrücke aufgeprägt.

Beispielsweise offenbart die DE 102 16 596 A1 die Verwendung eines Tiefsetzers, der eine getaktete Gleichspannungsquelle realisiert. ,

Die in DE 102 16 596 A1 offenbarte Realisierung der Amplitudenmodulation mit Hilfe eines Tiefsetzers hat den Nachteil, dass insbesondere die Amplitudenmodulationstiefe in nur engen Grenzen nachjustiert werden kann, da sie nicht unter vollständig und ausschließlich vom Zustand eines einzelnen Steuersignals abhängt sondern auch vom Lastverhalten des Verbrauchers bzw. der Lampe. Aufgrund von Alterungseffekten in der Lampe oder infolge veränderter Lampeneigenschaften im Dimm-Betrieb ist es notwendig, dass die Amplitudenmodulation über einen weiten Bereich variierbar ist.

### Darstellung der Erfindung

Es ist Aufgabe der Erfindung, eine Vorrichtung zum Bereitstellen einer sinusförmig amplitudenmodulierten Betriebsspannung bereitzustellen, die die Möglichkeit zur beliebigen und stufenlosen Einstellbarkeit in der Modulationstiefe bietet.

Diese Aufgabe wird gelöst durch eine Vorrichtung gemäß Patentanspruch 1. Femer stellt die Erfindung ein Beleuchtungssystem gemäß Patentanspruch 7 und ein Verfahren gemäß Patentanspruch 8 bereit.

Die erfindungsgemäße Vorrichtung, welche insbesondere zur Speisung eines Halbbrücken-Inverters mit darin angekoppelter Hochdruck-Entladungslampe dient, weist zwei als Halbbrücke angeordnete Schalter und ein der Halbbrücke nachgeordnetes LC-Glied auf. Ein erster Schalter der Halbbrücke wird in einer Taktung mit der Amplitudenmodulationsfrequenz pro Takt mit einem ersten Signal angesteuert, und ein zweiter Schalter wird zeitversetzt zu dem ersten Signal in jedem Takt mit einem zweiten Signal angesteuert, das kürzer als das erste Signal ist. Das sich an einem Verbindungspunkt zwischen den Schaltern in der Schalter-Halbbrücke ergebende Signal wird von dem nachgeordneten LC-Glied in der Erfindung derart gefiltert, dass das LC-Glied eine Gleichspannungskomponente sowie eine sinusförmige Komponente des Signals mit der Grundfrequenz der Taktung durchlässt und Harmonische, also höhere Harmonische als die Grundfrequenz, (im Wesentlichen) ausfiltert.

Die Verwendung einer asymmetrisch angesteuerten Halbbrücke hat gegenüber dem Tiefsetzer aus dem Stand der Technik den Vorteil, dass infolge des zweiten Schalters ein weiterer Freiheitsgrad entsteht, mit dem die resultierende AM, entweder durch Variation des Tastverhältnisses oder durch Variation der aktiven Zeit nur eines der beiden Schalter, beeinflusst werden kann.

Insbesondere kann durch Variation des zweiten, kürzeren Signals (unter Einhaltung der so genannten Blankoutzeit) die Modulationstiefe beliebig tief und stufenlos eingestellt werden.

Gemäß einer bevorzugten Ausführungsform sind die Ansteuersignale Rechtecksignale.

Die Modulatorhalbbrücke wird hierbei mit einer Gleichspannung versorgt.

Die Dauer und Zeitversetzung der Schalt-Signale soll gemäß der bevorzugten Ausführungsform derart bemessen sein, dass an dem Verbindungspunkt zwischen den Schaltern in jedem Takt ein Rechtecksignal mit der Amplitude der Gleichspannung ergibt, dessen Periodendauer genau der Wiederholfrequenz der Schalt-Steuersignale entspricht und dessen Duty-Cycle (Tastverhältnis) durch die gewählten Schaltlängen der beiden Schalter bestimmt wird.

Würde das Rechtecksignal bei einer absolut symmetrischen Ansteuerung der beiden Schalter einen Duty-Cycle von genau 50 % haben , so ergäbe sich nach der Filterung durch das LC-Glied (entsprechend seines Fourierspektrums) eine Gleichspannungskomponente von U0/2 und eine hohe bzw. maximale Grundwellenkomponente der vorliegenden Schaltfrequenz.

Wäre der hohe (aktive) Teil des Rechtecksignal kürzer als die Hälfte des Taktes (Duty-Cycle <50%), so ergäbe sich eine Gleichspannungskomponente, die kleiner als U0/2 ist, und der Betrag der Grundwellenkomponente würde sich auch verringern.

Ist der hohe (aktive) Teil des Rechtecksignal länger als die Hälfte des Taktes (Duty-Cycle >50%), so ergäbe sich eine Gleichspannungskomponente, die größer als U0/2 ist und der Betrag der Grundwellenkomponente würde sich auch verringern.

In der Regel wird der bei der bevorzugten Ausführungsform aktive Teil des Rechtecksignal länger als die Hälfte des Taktes bemessen werden, damit sich noch eine wesentliche Gleichspannungskomponente zur Speisung der Hochdruck-Entladungslampe ergibt.

Im vorliegenden Fall kann gemäß der Erfindung das Rechtecksignal hinsichtlich seines Duty-Cycles (Tastverhältnisses) so bemessen werden, dass der Betrag der Grundwelle nach dem LC-Filter zu der gewünschten Modulationstiefe führt, als auch dass zur Speisung des Inverters für die Hochdruck-Entladungslampe eine ausreichend hohe Gleichspannungskomponente erzeugt wird.

Da beide Parameter voneinander nicht unabhängig sind, muss in der Regel die gewünschte Gleichspannungskomponente über die Höhe der speisenden Versorgungsspannung Uo nachgeführt werden, damit die gewünschte Ausgangsleistung zur Lampe hin gewährleistet bleibt (Lampenleistungsregelung).

Typische Werte sind bei Amplitudenmodulationsfrequenzen von zwischen 23 kHz und 28kHz für den aktiven Teil des Rechtecksignal 25 µs bis 40 µs, dabei bevorzugt 30 µs bis 35 µs und für den inaktiven Teil des Rechtecksignal 1 µs bis 15 µs, bevorzugt sind dabei 1 µs bis 5 µs. Durch die Variation des inaktiven Teils des Rechtecksignals zwischen 1 µs und 15 µs ergibt sich eine starke Variation der Amplitudenmodulationstiefe, die je nach Charakteristik des LC-Filters 10 % bis zu 40 % betragen kann.

Der oben erwähnte Vorteil, dass durch Variation des zweiten Signals bei der Erfindung eine leichte stufenlose Einstellbarkeit der Modulationstiefe gewährleistet ist, kann dazu ausgenutzt werden, einen Regelkreis zur Nachführung der Modulationstiefe aufzubauen.

Hierzu muss die amplitudenmodulierte Betriebsspannung abgegriffen und gemessen werden und mit einem Sollwert verglichen werden. Bei einer Abweichung vom Sollwert muss die Amplitudenmodulationstiefe nachgeführt werden, was sich ja einfach durch Variation der Schaltlänge des zweiten Schalters realisieren lässt.

Die erfindungsgemäße Regelung kann wie folgt aussehen:

Die abgegriffene Betriebsspannung wird einerseits gefiltert, was den Monitorwert für die mittlere Spannungshöhe liefert.

Ferner wird die abgegriffene Betriebsspannung einem differenzierenden Spitzenwertgleichrichter unterzogen, der die Spannungsvariationen ausgibt, was dem Monitorwert für die absolute Modulation entspricht.

Aus den beiden Monitorwerten lässt sich nun die tatsächlich vorliegende Modulationstiefe mittels einer Division ermitteln. Dieser Messwert für die Modulationstiefe kann nun mit einem Sollwert verglichen werden und entsprechend bezüglich Dynamik geeignet gewählter Regelparameter eine Nachführung der Amplitudenmodulationstiefe durch Variation des Schaltzustandes des zweiten unteren Schalters erfolgen. ,

Eine bevorzugte Ausführungsform zur Regelung der Modulationstiefe ist, dass der Monitorwert für die mittlere Spannung am Ausgang des Glättungsgliedes direkt mit der doppelten Sollwertvorgabe der gewünschten Modulationstiefe multipliziert wird. Das multiplizierte Signal und die Spannungsvariation werden einem Regler zugeführt, der ein Regelsignal abgibt. Wie weiter unten gezeigt werden wird, ist die multiplizierte Größe im Idealfall gleich dem Sollwert der absoluten Spannungsvariation, so dass an diesem Regler die vorliegende Regelabweichung ermittelt werden kann und anschließend die Erzeugung eines passenden Regelsignals erfolgt.

Die Erzeugung der beiden Schaltersignale kann in einem Pulsweitenmodul im einzelnen so aussehen, dass das erste Signal direkt erzeugt wird und zur Erzeugung des zweiten Signals ein mit dem ersten Signal synchronisiertes Sägezahnspannungssignal bereitgestellt wird, wobei unter synchronisiert hier zu verstehen ist, dass der Sägezahn im Takt dann auftritt, wenn das das erste Signal bildende Rechtecksignal zu Null geworden ist. Das Sägezahnspannungssignal wird einem Komparator zugeführt, der im Bedarfsfall ein Rechtecksignal ausgibt. Das Rechtecksignal wird dann auf Null gesetzt, wenn die Sägezahnspannung einen bestimmten, durch das Regelsignal vorgegebenen Schwellwert überschreitet.

Ist das Regelsignal hoch, so ist der Demand nach Modulationstiefe hoch , die Schaltschwelle wird sinngemäß später überschritten und die Pulsdauer des zweiten unteren Schalters wird sinngemäß länger.

Ist das Regelsignal niedrig, so ist der Demand nach Modulationstiefe niedrig , die Schaltschwelle wird sinngemäß früher überschritten und die Pulsdauer des zweiten unteren Schalters wird sinngemäß kürzer.

Es handelt sich also um eine besonders einfache Art der Steuerung mit dem Regelsignal, wobei die Höhe des Regelsignals in besonders direkter Art und Weise mit der Länge des Rechtecksignals verbunden ist, welche wiederum ein Tastverhältnis desjenigen Signals bestimmt, was von der Halbbrücke abgegeben wird und nach Durchlauf des LC-Glieds entsprechend die Tiefe der Amplitudenmodulation definiert.

Die Erfindung betrifft auch ein Beleuchtungssystem, welches gewissermaßen als Vorschaltgerät die erfindungsgemäße Vorrichtung umfasst, den bereits erwähnten Wechselrichter (In- , verter, also z. B. Halbbrücken-Inverter), der von der amplitudenmodulierten Betriebsspannung gespeist wird und Ausgangsklemmen besitzt, an denen eine Lampenspannung anliegt, sowie eine Hochdruck-Entladungslampe, die mit den Ausgangsklemmen gekoppelt ist.

Zur Erfindung gehört ferner ein Verfahren zum Erzeugen einer amplitudenmodulierten Spannung, insbesondere als Betriebsspannung zur Speisung eines Wechselrichters in einem Beleuchtungssystem mit einer Hochdruck-Entladungslampe. Das Verfahren umfasst, dass
a) in einem ersten Schritt durch passende (geeignete) Ansteuerung zweier als Halbbrücke angeordneter Schalter ein getaktetes Rechtecksignal erzeugt wird, das länger als die Hälfte des Taktes andauert, und dass
b) in einem zweiten Schritt das getaktete Rechtecksignal einem Filter unterzogen wird, der einen Gleichspannungsanteil und einen mit der Grundfrequenz getakteten sinusförmigen Spannungsanteil durchlässt, aber Harmonische der Grundfrequenz ausfiltert.

### Kurze Beschreibung der Zeichnungen

Im folgenden soll die Erfindung anhand mehrerer Ausführungsbeispiele näher erläutert werden, es zeigen:
- Figur 1: ein Schaltbild der erfindungsgemäßen Vorrichtung, wobei die der Ansteuerung dienenden Bauteile weggelassen sind,
- Figur 2: eine vollständig geregelte analoge Ausführungsform der vorliegenden Erfindung und
- Figur 3: eine vollständig geregelte digitale Ausführungsform der vorliegenden Erfindung.

### Bevorzugte Ausführung der Erfindung

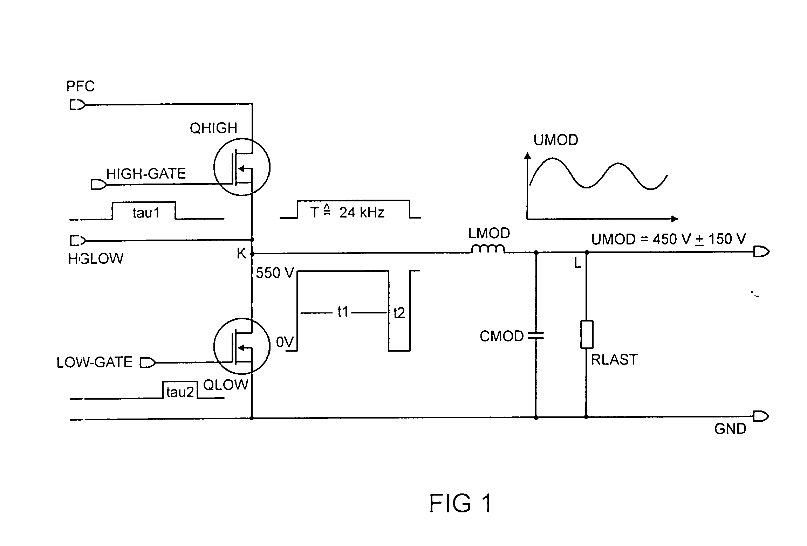

Die in Figur 1 gezeigte Vorrichtung umfasst als wesentliche Bestandteile zwei als Halbbrücke angeordnete Schalter QHIGH und QLOW (beide Schalter sind MOSFETs) sowie ein der Halbbrücke nachgeordnetes LC-Glied aus der Induktivität LMOD und der Kapazität CMOD.

Die Halbbrücke wird mit einer Gleichspannung U0 von 550 VDC gespeist, welche, wie in , Figur 1 angezeigt, von einer PFC-Stufe herkommt (Power Factor Controller), d. h. einer Stufe, welche den Übergang vom Netz zu einem elektronischen Vorschaltgerät für eine Hockdruck-Entladungslampe schafft. Während eines hier zur Erläuterung zwischen die Bauteile eingezeichneten Taktes von 24 kHz wird der erste Schalter auf der Ansteuerleitung HIGH-GATE von einer Rechteckspannung mit der Länge tau1 gleich 30 µs angesteuert. Im Takt nach dem Rechteckimpuls der Zeitdauer tau1 folgt auf der Ansteuerleitung LOW-GATE für den zweiten Schalter QLOW ein Rechteckimpuls der Zeitdauer tau2. Ein typischer Zeitdauerwert für tau2 beträgt 1,8 µs. Der Rechteckimpuls mit der Zeitdauer tau2 sollte direkt unter Einhaltung einer typischen Totzeit von 0.5 µs bis 1 µs dem Rechteckimpuls mit der Zeitdauer tau1 folgen. Der Takt des Gesamtzyklus beträgt 24 kHz.

Aufgrund der Halbrücken-Anordnung haben die beiden Schalter QHIGH und QLOW einen Verbindungspunkt K, an dem sich in Figur 1 das rechts im Bild gezeigte Signal ergibt. Während des Taktes mit der Dauer T steigt die Spannung an dem Punkt K von 0 V auf 550 V während einer Zeitdauer t1>=tau1 und sinkt anschließend für eine Zeitdauer t2>=tau2 auf 0 V. Anschließend beginnt der Takt von neuem, d. h. die Spannung steigt und fällt abermals. Das Verhältnis tl/t2 definiert das Tastverhältnis am Punkt K. Die Zeitdauern t1 und t2 werden im Wesentlichen durch die zeitliche Lage der abfallenden Flanken der Rechteckspulse mit den tau 1 und tau2 definiert. Während des Taktes mit der Zeitdauer T bleibt die Spannung von Beginn an zunächst auf 550 V und fällt dann nach Beendigung des Pulses mit der Zeitdauer tau1 zeitgleich mit der abfallenden Flanke dieses Pulses auf einen Wert von 0 V, d. h. die Zeit t1 ist verstrichen. Ab jetzt erst kann nach Einhaltung einer kleinen Totzeit (typischer Wert bei Halbbrücken= 0,5 µsec) der Puls tau2 beginnen. Während des Rechteckspulses mit der Zeitdauer tau2 bleibt die Spannung an dem Punkt K auf 0 V. Sie steigt erst nach Beendigung des Pulses mit der Zeitdauer tau2 mit dessen abfallender Flanke wieder auf einen Wert von 550 V, unabhängig davon, ob der Puls am ersten Schalter QHIGH bereits wieder von vorne begonnen hat.

Es ist also die Zeitdauer tau2, die im Wesentlichen t2 bestimmt, wobei diese Zeiten nicht unbedingt gleich sind, sich aber dann aneinander annähern, wenn die Zeitdauer tau2 direkt nach Ablauf der Zeitdauer tau1 beginnt. Dadurch, dass tau2 deutlich kleiner als tau1 ist, ist t2 deutlich kleiner als t1. Das Signal gleicht somit einer Gleichspannung von 550 V während der Zeitdauer t1 mit einem kurzen Einbruch auf 0 danach. Bei einer Filterung, wie es hier durch das LC-Glied aus der Induktivität LMOD und der Kapazität CMOD erfolgt bei anliegender Last RLAST (Impedanz der Halbbrückenstufe zum Betrieb der Lampe) ergibt sich am Punkt L die rechts oben in Figur 1 gezeigte Spannung UMOD, d. h. eine amplitudenmodulierte Spannung mit einem Gleichspannungsanteil von weniger als 550 V (typischerweise von 450 V) und einer hier gezeigten Modulationstiefe von 10 bis 50 %.

Es sei hier nochmals angemerkt, dass das LC-Glied nur den Gleichfrequenzanteil und die Grundfrequenz von 24 kHz durchlässt, höhere Harmonische aber herausfiltert. In dem Rechtecksignal am Verbindungspunkt K verbergen sich natürlich alle höhere Harmonischen, die weitgehend ausgefiltert werden.

Bisher wurde nur auf den Kern der Vorrichtung zum Bereitstellen einer sinusförmig amplitudenmodulierten Betriebsspannung eingegangen. Wir wollen im Weiteren betrachten, wie die Ansteuerung funktioniert, insbesondere wie sie geregelt funktioniert.

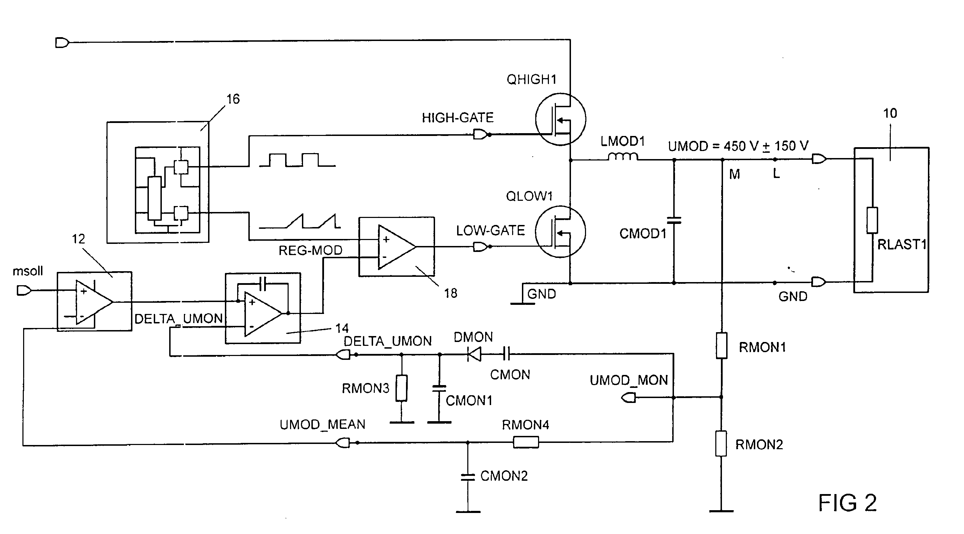

Figur 2 zeigt eine Vorrichtung zum Bereitstellen einer geregelten sinusförmigen amplitudenmodulierten Betriebsspannung gemäß einer ersten Ausführungsform mit symbolisch daran befindlicher Last, nämlich dem Lamp-Inverter 10, beispielsweise eines Halbbrücken-Inverters mit Hochdruck-Entladungslampe, wie er aus dem Stand der Technik bekannt ist. Vor dem Punkt L wird am Punkt M die Spannung UMOD über einen Spannungsteiler aus den Widerständen RMON1 und RMON2 abgegriffen, also UMOD_MON. Es erfolgt die Ermittlung des Mittelwertes UMOD_MEAN über ein RC-Glättungsglied aus dem Widerstand und der Kapazität CMON2. Gleichzeitig wird im anderen, in Figur 2 oberen Zweig, die Spannungsvariation DELTA_UMON über einen kapazitiv gekoppelten Spitzenwertgleichrichter DMON ermittelt.

Der Messwert für den momentanen Modulationsgrad ergibt sich aus m=(Umax-Umin)/(Umax+Umin)=DELTA_UMON/2 x UMOD_MEAN.

Die Regelung soll nun entsprechend einer Sollwertvorgabe mₛₒₗₗ die Pulsdauer tau2 unter Bezug auf Figur 1 beschriebenen Amplitudenmodulator angemessen vergrößern oder verkleinern, bis die gemessene Modulationstiefe mit der Sollwertvorgabe im Einklang ist.

Zur Umgehung einer Division führt man eine Multiplikation des Sollwerts mₛₒₗₗ mit dem Mittelwert UMOD_MEAN durch (Multiplikator 12), wobei die Multiplikation hier mit einer einstellbaren Verstärkerstufe realisiert ist. Der Multiplikationswert aus dem Multiplikator 12 wird anschließend nochmals verdoppelt und an einem Regler 14 mit DELTA_UMON verglichen.

Zu diesem Zweck wird der Wert für DELTA_UMON und der aus dem Multiplikator 12 ausgegebene Wert einem Regler 14 mit Error-Amplifier zugeführt. Der Regler 14 gibt unter Berücksichtigung geeigneter Regeldynamikparametern ein Regelsignal REG_MOD aus.

Die unter Bezug auf Figur 1 beschriebene Schaltung wird nun von einem Taktgenerator 16 angesteuert, der auf einer Leitung ein Rechtecksignal abgibt und auf einer anderen Leitung ein damit synchronisiertes Sägezahnsignal. Das Rechtecksignal ist direkt das Signal, was auf die Leitung HIGH-GATE für den ersten Schalter QHIGH gegeben wird.

Die Sägezahnspannung selbst wird einem Komparator als Pulsweitenmodulationsmodul 18 zugeführt, auf dessen zweiten Eingang das Regelsignal REG_MOD als Schwellenreferenzwert für den Komparator liegt.

Ist der Demand an Am-Tiefe hoch, so ist das REG_MOD-Signal als Schwellwert hoch und der Sägezahn überschreitet später die Schwelle, wodurch die Pulsdauer aus dem PWM-Modul verlängert wird.

Ist der Demand an Am-Tiefe gering, so ist das REG_MOD-Signal als Schwellwert niedrig und der Sägezahn überschreitet früher die Schwelle, wodurch die Pulsdauer aus dem PWM-Modul verkürzt wird.

Zur Bestimmung der Zeitdauer tau2 wirkt das Signal REG_MOD als Schwellwert angebendes Signal. Je höher REG_MOD, desto länger ist tau2.

Das Signal aus dem Pulsweitenmodulationsmodul 18 kann direkt auf die Leitung LOW-GATE gegeben werden und ist ein Rechtecksignal mit der Zeitdauer tau2.

Durch die beschriebene Rückkopplung der Spannung UMOD und den Vergleich von Istwert und Sollwert für die Spannungsvariation im Regler 14 erhält man vermittels des Signals REG_MOD eine geeignete Ansteuerung zur direkten Festsetzung der Zeitdauer tau2.

Hierdurch erhält man einen geschlossenen Regelkreis zur Nachführung und Stabilisierung der Amplitudenmodulationstiefe.

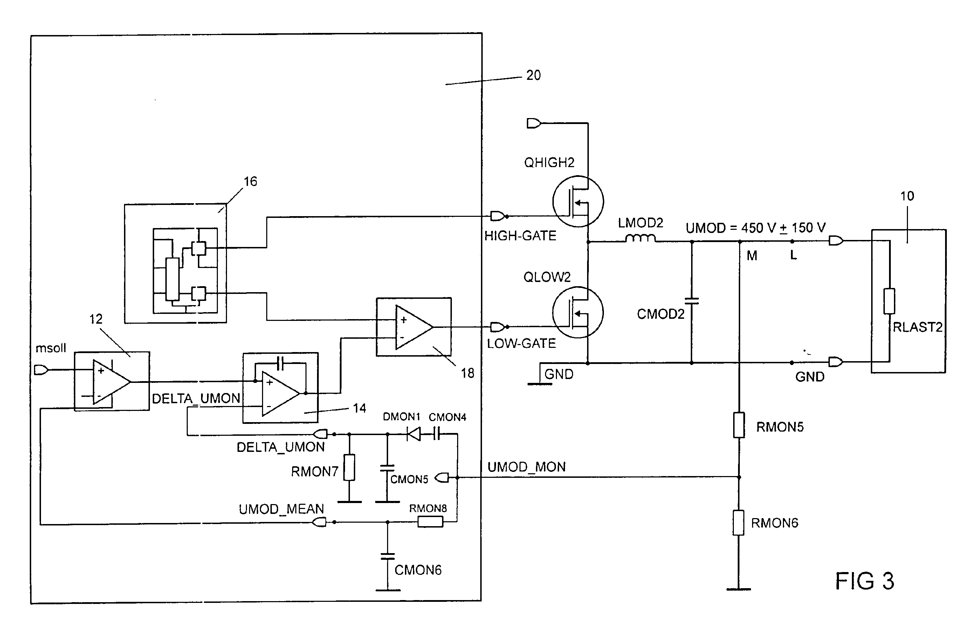

Der bisher beschriebene analoge Regelkreis lässt sich auch über einen Mikroprozessor realisieren. Figur 3 zeigt eine digitale Ausführungsform der erfindungsgemäßen Vorrichtung. Hierbei sind die selben Bauteile wie aus Figur 2 gezeigt, nur sind die Funktionen der Ermittlung der mittleren Spannung UMOD_MIN und DELTA_UMON sowie der Multiplikation, der Regelung, der Pulsweitenmodulation und der Ausgabe eines Taktes einem Mikroprozessor 20 zugeordnet. Die symbolhafte Darstellung der analogen Bauteile bedeutet hier, dass der Mikroprozessor 20 die entsprechenden Algorithmen übernimmt. Der Mikroprozessor 20 empfängt nur das abgegriffene UMOD_MON und gibt auf die Leitungen HIGH-GATE und LOW-GATE Rechteckpulse mit den Zeitdauern tau1 bzw. tau2 aus. Bei der Ausführungsfonn aus Figur 3 ist es somit so, dass verglichen mit den Bauteilen aus Figur 1 zur Erzeugung der Gate-Signale nur noch ein Spannungsteiler und ein Mikroprozessor vorhanden sind.

## Patentansprüche

1. Vorrichtung zum Bereitstellen einer sinusförmig amplitudenmodulierten Betriebsspannung, insbesondere zur Speisung eines Halbbrücken-Inverters (10) mit daran angekoppelter Hochdruck-Entladungslampe,
- mit zwei als Halbbrücke angeordneten Schaltern (QHIGH und QLOW), von denen ein erster Schalter (QHIGH) in einer Taktung mit der Amplitudenmodulationsfrequenz pro Takt mit einem ersten Signal angesteuert wird und ein zweiter Schalter (QLOW) zeitversetzt zu dem ersten Signal in jedem Takt mit einem zweiten Signal angesteuert wird, das kürzer als das erste Signal ist, und
- mit einem der Halbbrücke nachgeordneten LC-Glied (LMOD, CMOD), das als Filter für sich das aus der Ansteuerung der Schalter an einem Verbindungspunkt (K) zwischen den Schaltern ergebende Signal wirkt und eine Gleichspannungskomponente sowie eine sinusförmige Komponente des Signals mit der Grundfrequenz der Taktung durchlässt und Harmonische im Wesentlichen ausfiltert.

2. Vorrichtung nach Anspruch 1,
**dadurch gekennzeichnet, dass**
die Ansteuersignale Rechtecksignale sind derart, dass sich bei Speisung der Halbbrücke mit einer Gleichspannung an dem Verbindungspunkt (K) zwischen den Schaltern in jedem Takt ein Rechtecksignal mit der Amplitude der Gleichspannung ergibt, das länger als die Hälfte des Taktes andauert.

3. Vorrichtung nach Anspruch 2,
**dadurch gekennzeichnet, dass**
die Amplitudenmodulationsfrequenz zwischen 23 kHz und 28 kHz liegt, das erste Rechtecksignal zwischen 25 µs und 40 µs und bevorzugt zwischen 30 µs und 35 µs lang ist, und das zweite Rechtecksignal zwischen 1 und 15 µs, bevorzugt zwischen 1 µs und 5 µs lang ist.

4. Vorrichtung nach einem der vorhergehenden Ansprüche,
**dadurch gekennzeichnet, dass**
die amplitudenmodulierte Betriebsspannung (UMOD) abgegriffen wird und zur Regelung der Dauer des zweiten Signals eingesetzt wird, wobei die Regelung analog (12, 14, 16, 18) oder vermittels eines Mikroprozessors (20) durchgeführt wird.

5. Vorrichtung nach Anspruch 4,
**dadurch gekennzeichnet, dass**
die abgegriffene Betriebsspannung (UMOD_MON) einerseits einem Filter (RMON4, CMON2) unterzogen wird, der die gemittelte Spannungshöhe ausgibt, welche in einem Multiplikator (12) mit dem zweifachen eines Sollwerts (mₛₒₗₗ) für den Modulationsgrad multipliziert wird, und dass die abgegriffene Betriebsspannung andererseits einem Spitzenwertgleichrichter (DMON) unterzogen wird, der die Spannungsvariation (DELTA_UMON) ausgibt, und wobei das multiplizierte Signal und die Spannungsvariation (DELTA_UMON) einem Regler (14) zugeführt werden, der ein Regelsignal (REG_MOD) abgibt.

6. Vorrichtung nach Anspruch 5,
**dadurch gekennzeichnet, dass**
das Regelsignal einem Pulsweitenmodulationsmodul (18) zugeführt wird, dem an einem anderen Eingang ein mit dem ersten Signal synchronisiertes Sägezahnspannungssignal zugeführt wird, wobei das Pulsweitenmodulationsmodul das zweite Signal als Rechtecksignal abgibt, dessen Länge von dem Regelsignal abhängig ist.

7. Beleuchtungssystem, mit:
- einer Vorrichtung zum Bereitstellen einer amplitudenmodulierten Betriebsspannung nach einem der vorhergehenden Ansprüche,
- einem Wechselrichter (Inverter) (10), der von der amplitudenmodulierten Betriebsspannung gespeist wird und Ausgangsklemmen besitzt, an denen eine Lampenspannung anliegt, und
- einer Hochdruck-Entladungslampe, die mit den Ausgangsklemmen gekoppelt ist.

8. Verfahren zum Erzeugen einer amplitudenmodulierten Spannung, insbesondere als Betriebsspannung zur Speisung eines Wechselrichters (10) in einem Beleuchtungssystem mit einer Hochdruck-Entladungslampe,
**dadurch gekennzeichnet, dass**
a) in einem ersten Schritt durch passende Ansteuerung zweier als Halbbrücke angeordneter Schalter (QHIGH, QLOW) ein getaktetes Rechtecksignal erzeugt wird, das länger als die Hälfte des Taktes andauert, und dass
b) in einem zweiten Schritt das getaktete Rechtecksignal einem Filter unterzogen wird, der einen Gleichspannungsanteil und einen mit der Grundfrequenz getakteten sinusförmigen Spannungsanteil durchlässt, aber Harmonische der Grundfrequenz ausfiltert.
